# EUROPÄISCHE PATENTSCHRIFT

(11) **EP 2 839 060 B1**
(45) Veröffentlichungstag und Bekanntmachung des Hinweises auf die Patenterteilung: **13.04.2016**
(21) Anmeldenummer: 13722303.8
(22) Anmeldetag: 16.04.2013
(51) Int. Cl.: D01D 5/06, D01D 13/02

(54) **VERFAHREN ZUR HERSTELLUNG VON FORMKÖRPERN**
METHOD FOR PRODUCING MOULDED ARTICLES
PROCÉDÉ DE RÉALISATION DE CORPS MOULÉS

(30) Priorität: 17.04.2012 DE 102012103296
(43) Veröffentlichungstag der Anmeldung: 25.02.2015
(73) Patentinhaber: LIST Holding AG, 4422 Arisdorf (CH)
(72) Erfinder: DIENER, Andreas, 01665 Miltitz (DE); GRUNDEI, Andreas, 79736 Rickenbach (DE); TRETZACK, Oliver, 79686 Hasel (DE)
(74) Vertreter: Patentanwälte und Rechtsanwalt Weiß, Arat & Partner mbB
(86) Internationale Anmeldenummer: PCT/EP2013/057931
(87) Internationale Veröffentlichungsnummer: WO 2013/156489

(56) Entgegenhaltungen:
- EP-A2- 0 356 419
- WO-A1-94/06530
- WO-A1-97/11973
- US-A- 5 948 905

## Beschreibung

Die vorliegende Erfindung betrifft ein Verfahren zur Herstellung von Formkörpern aus einer Grundsubstanz nach dem Oberbegriff von Anspruch 1.

### STAND DER TECHNIK

Im vorliegenden Fall werden unter dem Begriff "Formkörper" alle möglichen Körper subsumiert, die aus einer natürlichen oder künstlichen Grundsubstanz hergestellt werden. Dies geschieht in der Regel mit Hilfe eines Formwerkzeugs, mit dem die Grundsubstanz in eine Form für die Formkörper gebracht wird. Als Beispiel, jedoch keineswegs einschränkend oder abschliessend, soll die Viskosefaser erwähnt werden. Viskosefasern sind Fasern, die aus dem Grundmaterial Zellulose bestehen und über das Viskoseverfahren industriell hergestellt werden. Die chemische Natur der Viskosefasern gleicht der von Baumwollfasern.

Ein ähnliches Produkt wie Viskosefasern sind Modalfasern. Sie bestehen ebenfalls zu 100% aus Zellulose und werden, so wie Viskosefasern, aus natürlichem Zellstoff hergestellt. Durch einen etwas unterschiedlichen Prozess wird jedoch eine höhere Faserfestigkeit und verbesserte Fasereigenschaften erreicht.

Ebenfalls in die Klasse der zellulosischen Fasern sind die Lyocellfasern einzuordnen. Bei den Lyocellfasern wird der Zellstoff durch das ungiftige Lösungsmittel NMMO (N-Methylmorpholin-N-Oxid) ohne vorherige Reaktion mit Natronlauge und Derivatisierung zum Xanthogenat direkt und unverändert aufgelöst. Das Verspinnen der Lyocellfasern erfolgt in einem verdünnten, wässrigen NMMO-Bad, wobei die Löslichkeitsgrenze der Zellulose unterschritten und dadurch ein Faden gebildet wird. Zu diesem Zweck wird die entsprechende Spinnlösung durch Spinndüsen gedrückt. Dieses Lyocell-Verfahren wird beispielsweise in der DE 1 713 486, US-A-3 447 939 oder GB 8 216 566 beschrieben. Die Herstellung der geeigneten Spinnlösung erfolgt beispielsweise in einem zylindrischen, vertikal arbeitenden Dünnschichtlöser (Filmtruder), wie dies zum Beispiel in GB 08/875,437 oder US 5,888,288,A beschrieben ist, oder einem horizontal arbeitenden Dickschichtlöser (Knetreaktor), wie dies in der DE 198 37 210 oder der WO 02/20885 A1 aufgezeigt ist.

Speziell wird auf die US 5 948 905 A verwiesen, wo in der letzten Stufe eines mehrstufen Flashverdampfungsverfahrens ein Dünnschichtverdamper gezeigt ist, dem eine Vakuumpumpe zugeordnet ist. Das Produkt gelangt aus dem Dünnschichtverdampfer direkt in einen Extruder und wird zu einer Filtrationseinrichtung hin ausgetragen.

Aus der WO 94/06530 ist ein Verfahren der gattungsgemässen Art bekannt, bei dem eine Zellulosemaische in einen Dünnschichtverdampfer eingegeben wird. In diesem Dünnschichtverdampfer findet eine Verdampfung von Wasser und eine Lösung der Zellulose in N-Oxid statt, so dass eine Formlösung stark aufkonzentriert wird. Diese Formlösung wird dann durch eine Austragseinrichtung ausgetragen.

In diesen Vorrichtungen und nach den bekannten Verfahren wird die Spinnlösung in der für den Spinnprozess notwendigen weiter verarbeitbaren Viskosität und der dazugehörigen Zellulosekonzentration hergestellt.

Beide Vorrichtungen für die Erzeugung der Spinnlösung für die Herstellung der Lyocellfasern sind nicht optimal für den gesamten Löseprozess des Grundmateriales Zellstoff im Lösemittel NMMO geeignet. Der vertikale Dünnschichtlöser hat einen guten Wärmeübergang, aber eine kurze Verweilzeit wodurch das notwendige Quellen der Naturfasern und die notwendige Homogenisierung für eine perfekte Spinnlösung nicht ermöglicht wird. Der horizontale Dickschichtlöser realisiert eine längere Verweilzeit, die zu einer guten Penetration des Lösungsmittels in die Faser und damit einer guten Homogenisierung für eine sehr gute Spinnlösung führt.

Beide Vorrichtungen werden aber dennoch heute für die Erzeugung der Spinnlösung für die Lyocellfasern in der Industrie eingesetzt. Aufgrund der oben beschriebenen suboptimalen Bedingungen werden die Löser für beide Verfahren immer grösser und sind durch ihre maximalen Baugrössen limitiert. Grössere Linienkapazitäten von mehr als 50 t Fasern per Tag sind mit diesen Vorrichtungen so nicht realisierbar. Kapazitäten von 100 t Fasern pro Tag und Produktionslinie sind notwendig, um diese Technologie langfristig effizienter und damit konkurrenzfähig zur Viskosefaser oder zur Modalfaser zu machen.

### AUFGABE

Der vorliegenden Erfindung liegt die Aufgabe zugrunde, das o.g. Verfahren so zu optimieren, um größere Kapazitäten zum Beispiel von mehr als 100 t Fasern pro Tag und Produktionslinie realisieren zu können.

### LÖSUNG DER AUFGABE

Zur Lösung der Aufgabe führen die Merkmale des kennzeichnenden Teils von Anspruch 1.

Der Löseprozess wurde anhand der Grundmasse Zellstoff in NMMO prozesstechnisch auf der Basis der beiden bekannten Vorrichtungen analysiert.

Es wurde festgestellt, dass der Löseprozess prinzipiell in drei Abschnitte unterteilt werden kann, die sehr unterschiedlichen Prozessbedingungen erfordern. Im ersten Abschnitt findet die Wasserverdampfung aus einer Zellstoff-Lösemittel-Suspension (auch Maische genannt) bis zum Startpunkt des Lösens des Zellstoffes statt, welches dem Erreichen des Lösefensters und damit ca. dem 2,5 Hydrates des NMMO entspricht. Dieser Abschnitt benötigt viel Wärmeenergie zur Verdampfung des Wassers, bedingt aber keine zusätzliche Verweilzeit, weil der Zellstoff noch nicht gelöst wird, und die Viskosität der Suspension ist niedrig.

Nach Erreichen des Lösefensters findet im zweiten Abschnitt das Hauptlösen mit einem starken Viskositätsanstieg und der dafür notwendigen geringeren Wasserverdampfung bis zum ca. 1,5 Hydrat des NMMO statt.

Der dritte Abschnitt ist von der Homogenisierung der Spinnlösung und einer ebenfalls geringeren Wasserverdampfung bis zum ca. 0,8 bis 1,0 Hydrat je nach Zellstoffkonzentration bestimmt.

Die prozesstechnische Auswertung zeigt nun im Zusammenhang mit den für die Lösestufe benutzten Vorrichtungen, dass sich der Dünnschichtverdampfer aufgrund der guten Wärmeübergänge sehr gut für die grosse Wasserverdampfung bei niedriger Viskosität und kurzer Verweilzeit im ersten Abschnitt und der Dickschichtlöser aufgrund der sehr guten Homogenisierung, der längeren Verweilzeiten sowie der Verarbeitung von höheren Viskositäten und der geringeren Wasserverdampfung für den zweiten und den dritten Abschnitt eignen.

Kontinuierliche Versuche mit einer mehrstufigen Pilotanlage haben gezeigt, dass diese Abschnittsaufteilung ein ausgewogenes Gleichgewicht bildet, so dass bei kluger Aufteilung und optimaler Verknüpfung der beiden Vorrichtungsvarianten die vorliegende Aufgabe mit der direkten Kombination des Dünnschichtverdampfers mit dem Dickschichtlöser gelöst werden konnte.

Beide Vorrichtungen sind so verknüpft, dass die Produkträume direkt verbunden sind, wodurch die Übergabestelle als komplizierte Schnittstelle innen liegend ist und damit die Übergabe von sich zum Teil ändernden Produktkonsistenzen entfällt. Schwankungen eines geringen Hold-up des Dünnschichtlösers kann der Dickschichtlösers problemlos ausgleichen.

Zur weiteren Erhöhung der Kapazität des Verfahrens wurde die schon in der WO 2009/098073 erläuterte konzentrierte Lösung in die Betrachtung einbezogen. Es ist damit möglich die zweistufige Herstellung der Spinnlösung mit der konzentrierten Lösung der Cellulose mit nachfolgender Rückverdünnung zu kombinieren und damit eine noch weitere Erhöhung der Effizient zu erreichen.

Wie schon bei der WO 2009/098073 soll die Konzentration der Formlösung und/oder des Verdünners über den optischen Index (Brechungsindex) kontrolliert werden. Dies geschieht beim Verdünner vor dem Einbringen in die Formlösung und/oder bei der Formlösung nach der Verdünnung. Gewünscht wird ein optischer Index des Verdünners und/oder der Formlösung im Rahmen von 1.45 bis 1.52.

Als Lösungsmittel bzw. Verdünnungsmittel wird bevorzugt ein wässriges tertiäres Aminoxid verwendet. Jedoch soll darauf die Erfindung nicht beschränkt sein. Auch ist die Erfindung nicht auf Zellstoff beschränkt, sondern umfasst werden auch Stoffe, wie Proteine, Polylaktide oder Stärke oder ein Gemisch dieser Stoffe.

Beim vorliegenden Verfahren ist es von untergeordneter Bedeutung, welcher Formkörper hergestellt wird. Vorzugsweise werden Filamente, Vliese bzw. Filamentgarn hergestellt. Es können aber auch Filme, Hohlfasern, Membranen od. dgl. hergestellt werden. Die Formung der Lösung zu einem gewünschten zellulosischen Formkörper kann mit bekannten Spinndüsen zur Herstellung von Fasern, Schlitzdüsen oder Hohlfadenspinndüsen erfolgen. Im Anschluss an die Formung, d.h., vor dem Einbringen der geformten Lösung in das Koagulationsbad, kann diese auch verstreckt werden.

### FIGURENBESCHREIBUNG

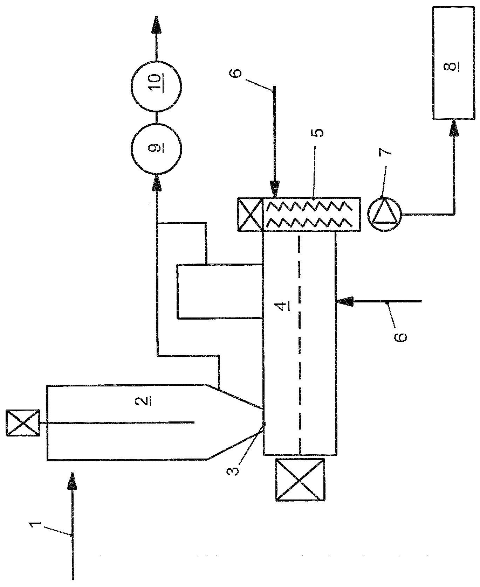

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in ihrer einzigen Figur ein blockschaltbildliches Schema für ein erfindungsgemässes Verfahren zur Herstellung von Formkörpern aus einer Grundsubstanz, insbesondere aus nachwachsenden Rohstoffen.

Die hierfür notwendige Zellulose bzw. die vorgemischte Zellulosemaische wird über eine Zuleitung 1 einem Dünnschichtverdampfer 2 zugeführt. Derartige vertikale zylindrische Apparate sind beispielsweise aus der GB 08/875,437 oder US 5,888,288 bekannt.

Im Dünnschichtverdampfer wird die Suspension aufkonzentriert. Von dort wird die konzentrierte Suspension direkt in einen Dickschichtlöser, bevorzugt einen horizontalen Knetreaktor 4, übergeben. Diese Knetreaktoren sind beispielsweise aus der DE 199 40 521 A1 oder der DE 41 18 884 bekannt. Auf diese Dünnschichtverdampfer und diese Knetreaktoren ist jedoch nicht die Erfindung beschränkt. Von der Erfindung werden alle Behandlungseinrichtungen umfasst, in denen nachwachsende Rohstoffe einer Behandlung zu einer späteren Formgebung unterzogen werden können.

Im vorliegenden Ausführungsbeispiel erfolgt die Behandlung des nachwachsenden Rohstoffs mittels eines Lösungsmittels, bevorzugt einem wässrigen tertiären Aminoxid, welches schon vorgängig als Zellulosemaische gemischt wurde und dementsprechend in der Zuleitung 1 dem Dünnschichtverdampfer zugeführt wird.

Im Dünnschichtverdampfer 2 erfolgt unter Wärmezugabe eine Wasserverdampfung aus der Suspension, ohne dabei den Zellstoff zu lösen. In dem Knetreaktor 4 erfolgt unter Wärmezugabe ein intensives Durchmischen des Rohstoffs mit dem Lösungsmittel, ein teilweises Verdampfen des Wassers aus dem Lösungsmittels und damit das Lösen des Zellstoffes, so dass eine relativ hochviskose Spinnlösung entsteht. Diese Spinnlösung wird dann über eine Austragseinrichtung 5 der Spinnanlage 8 zugeführt.

Die relativ hochviskose Spinnlösung wird vor der endgültigen Verarbeiten zu Lyocellfasern auf eine spinnfähige Zellstofflösung verdünnt . Dies geschieht in der Austragseinrichtung 5 über eine Zuleitung 6 oder sogar noch vor der Austragseinrichtung 5 in dem Knetreaktor 4 an beliebiger Stelle und/oder gesplittet. Auch an eine Kombination beider Zugabeorte ist gedacht.

Nach der Austragseinrichtung 5 und vor der Spinnanlage 8 ist eine Pumpe 7 eingeschaltet, mittels der die Formlösung nach dem Austrag gestaut wird. Das erfindungsgemässe Verfahren wird wie folgt durchgeführt:

Über die Zuleitung 1 erfolgt die Eingabe der Suspension, bestehend aus der Grundsubstanz, insbesondere des nachwachsenden Rohrstoffes, und des Lösungsmittels in den Dünnschichtverdampfer 2. Unter Wärmezugabe von aussen mittels Heizmantel erfolgt ein intensives Verdampfen des Wasser aus der Suspension bis zum Lösefenster, ohne die Lösung der Grundsubstanz zu starten.

Die konzentrierte Suspension wird aus dem Dünnschichtverdampfer 2 durch einen direkten Übergang 3 direkt ausgetragen und in den Dickschichtlöser 4 eingetragen. Im Dickschichtlöser 4, einem Knetreaktor, erfolgt ein intensives Durchmischen, wobei die Wärmezugabe von aussen mittels eines Heizmantels, durch beheizte Knetwellen und/oder durch beheizte Knetelemente (Scheibenelemente) 25 erfolgen kann. Ein weiterer mechanischer Wärmeeintrag erfolgt beim Durchmischen selbst durch die entsprechende Scherenergie.

Durch das Verdampfen eines Anteils aus dem Lösungsmittel wird die Suspension in eine Formlösung (Spinnlösung) umgewandelt und weiter aufkonzentriert, so dass sie gegen Ende des Knetreaktors 4 kurz vor der Austragseinrichtung 5 etwa einen Anteil von 14 bis 28 % an Grundsubstanz aufweist. Diese Formlösung ist für ein späteres Verspinnen zu hochviskos. Sie wird nun mit einem Verdünner verdünnt, der über die Zuleitung 6 zugeführt wird. Dabei wird die Konzentration der Formlösung vor und/oder nach der Zugabe des Verdünners über den optischen Index kontrolliert. Dieser optische Index wird auch als Brechungsindex bezeichnet. Er kennzeichnet die Brechung (Richtungsänderung) und das Reflektionsverhalten (Reflektion und Totalreflektion) von elektromagnetischen Wellen beim Treffen auf eine Grenzfläche zweier Medien.

Des Weiteren ist daran gedacht, vor dem Austrag oder in den Austrag, ggf. auch über die Zuleitung 6, noch der Formlösung/Mischung ein Additiv zuzuführen. Ein Additiv bzw. ein Additivgemisch kann auch zusammen mit dem Verdünner zugeführt werden.

Im Dünnschichtverdampfer 2 beziehungsweise im Knetreaktor 4 entstehende Dämpfe werden über eine Gastraumverbindung 9 einer Kondensation 10 zugeführt.

**Bezugszeichenliste**

| | | | | | |
|---|---|---|---|---|---|
| 1 | Zuleitung | 34 | | 67 | |
| 2 | Dünnschichtverdampfer | 35 | | 68 | |
| 3 | Direkter Übergang | 36 | | 69 | |
| 4 | Knetreaktor | 37 | | 70 | |
| 5 | Austragsvorrichtung | 38 | | 71 | |
| 6 | Zuleitung | 39 | | 72 | |
| 7 | Pumpe | 40 | | 73 | |
| 8 | Formgebung | 41 | | 74 | |
| 9 | Gasraumverbindung | 42 | | 75 | |
| 10 | Kondensation | 43 | | 76 | |
| 11 | | 44 | | 77 | |
| 12 | | 45 | | 78 | |
| 13 | | 46 | | 79 | |
| 14 | | 47 | | | |
| 15 | | 48 | | | |
| 16 | | 49 | | | |
| 17 | | 50 | | | |
| 18 | | 51 | | E | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zur Herstellung von Formkörpern aus einer Grundsubstanz, nämlich aus Zellulose, Proteinen, Polyaktiden oder Stärke oder einem Gemisch dieser Stoffe die zum Herstellen einer Formlösung mit einem Lösungsmittel vermischt und anschliessend dieses Lösungsmittel zumindest teilweise aus der Formlösung entfernt und die Formlösung einer Einrichtung (8) zum Formen zugeführt wird,
**dadurch gekennzeichnet,**
**dass** die Formlösung einem vertikalen zylindrischen Dünnschichtverdampfer (2) und einem horizontalem zylindrischen Dickschichtlöser (4) zugeführt wird, wobei die Formlösung noch im Dickschichtlöser (4) oder beim nachfolgenden Austragen aus dem Dickschichtlöser (4) auf eine für das Formen notwendige Viskosität rückverdünnt wird..

2. Verfahren nach Anspruch 1, **dadurch gekennzeichnet, dass** das Lösungsmittel ein wässriges tertiäres Aminoxid ist.

3. Verfahren nach Anspruch 2, **dadurch gekennzeichnet, dass** der Dünnschichtverdampfer (2) die Suspension aus Grundsubstanz und Lösungsmittel aufnimmt und durch Wasserverdampfung auf einen Vorlösezustand von ca. 2,5 Hydrat eines tertiären Aminoxides aufkonzentriert.

4. Verfahren nach wenigstens einem der Ansprüche 1 bis 3, **dadurch gekennzeichnet, dass** der Dickschichtlöser (4) die Suspension aus dem Dünnschichtverdampfer (2) durch Wasserverdampfung auf ca. 0,8 bis 1,0 Hydrat konzentriert, auflöst und in eine Formlösung homogenisiert.

5. Verfahren nach wenigstens einem der Ansprüche 1 bis 4, **dadurch gekennzeichnet, dass** der Dünnschichtverdampfer (2) und/oder der Dickschichtlöser (4) bei 80° bis 180°C, vorzugsweise bei 100° bis 150°C, betrieben wird/werden.

6. Verfahren nach wenigstens einem der Ansprüche 1 bis 5, **dadurch gekennzeichnet, dass** der Dünnschichtverdampfer (2) und/oder der Dickschichtlöser (4) unter einem Vakuum von 20 bis 200 mbar absolut, vorzugsweise unter 30 bis 100 mbar absolut, betrieben wird/werden.

7. Verfahren nach wenigstens einem der Ansprüche 1 bis 6, **dadurch gekennzeichnet, dass** eine permanente Temperaturkontrolle entlang der Achsen von Dünnschichtverdampfer (2) und/oder von Dickschichtlöser (4) erfolgt.

8. Verfahren nach wenigstens einem der Ansprüche 1 bis 7, **dadurch gekennzeichnet, dass** die Formlösung mittels einem optischen Index kontrolliert wird, der zwischen 1.47 und 1,52, vorzugsweise zwischen 1.48 und 1.50, liegt.

9. Verfahren nach wenigstens einem der Ansprüche 1 bis 8, **dadurch gekennzeichnet, dass** die Formlösung eine Spinnlösung ist und die Spinnlösung auf die für das Spinnen notwendige Viskosität rückverdünnt wird.

10. Verfahren nach den Ansprüchen 9, **dadurch gekennzeichnet, dass** der Verdünner ein wässriges tertiäres Aminoxid ist.

11. Vorrichtung zur Durchführung des Verfahrens nach wenigstens einem der Ansprüche 1 bis 10, **dadurch gekennzeichnet, dass** der Dünnschichtverdampfer (2) und/oder der Dickschichtlöser (4) über ihre Produktraum direkt miteinander verbunden sind.

12. Vorrichtung nach Anspruch 11, **dadurch gekennzeichnet, dass** der Dünnschichtverdampfer (2) und/oder der Dickschichtlöser (4) über ihren Gasraum direkt miteinander verbunden sind.

## Claims

1. A method for producing moulded parts from a base substance, namely from cellulose, proteins, polylactides or starch or a mixture of these substances, which substance in order to produce a moulding solution is mixed with a solvent and then this solvent is removed at least partially from the moulding solution and the moulding solution is supplied to a moulding means (8),
**characterised in that**
the moulding solution is supplied to a vertical cylindrical thin-film evaporator (2) and a horizontal cylindrical thick-layer dissolver (4), the moulding solution while still in the thick-layer dissolver (4) or upon the subsequent discharging from the thick-layer dissolver (4) being rediluted to a viscosity necessary for moulding.

2. A method according to Claim 1, **characterised in that** the solvent is an aqueous tertiary amine oxide.

3. A method according to Claim 2, **characterised in that** the thin-film evaporator (2) receives the suspension of base substance and solvent and due to evaporation of water concentrates it to a pre-dissolution state of approx. 2.5 hydrate of a tertiary amine oxide.

4. A method according to at least one of Claims 1 to 3, **characterised in that** the thick-layer dissolver (4) concentrates the suspension from the thin-film evaporator (2) by evaporation of water to approx. 0.8 to 1.0 hydrate, dissolves it and homogenises it to form a moulding solution.

5. A method according to at least one of Claims 1 to 4, **characterised in that** the thin-film evaporator (2) and/or the thick-layer dissolver (4) is/are operated at 80° to 180°C, preferably at 100° to 150°C.

6. A method according to at least one of Claims 1 to 5, **characterised in that** the thin-film evaporator (2) and/or the thick-layer dissolver (4) is/are operated under a vacuum of 20 to 200 mbar absolute, preferably under 30 to 100 mbar absolute.

7. A method according to at least one of Claims 1 to 6, **characterised in that** a permanent temperature monitoring takes place along the axes of the thin-film evaporator (2) and/or of the thick-layer dissolver (4).

8. A method according to at least one of Claims 1 to 7, **characterised in that** the moulding solution is monitored by means of an optical index which lies between 1.47 and 1.52, preferably between 1.48 and 1.50.

9. A method according to at least one of Claims 1 to 8, **characterised in that** the moulding solution is a spinning solution and the spinning solution is rediluted to the viscosity necessary for spinning.

10. A method according to Claim 9, **characterised in that** the diluent is an aqueous tertiary amine oxide.

11. A device for carrying out the method according to at least one of Claims 1 to 10, **characterised in that** the thin-film evaporator (2) and/or the thick-layer dissolver (4) are directly connected together via their product space.

12. A device according to Claim 11, **characterised in that** the thin-film evaporator (2) and/or the thick-layer dissolver (4) are directly connected together via their gas space.

## Revendications

1. Procédé de fabrication de corps moulés à partir d'une substance de base, notamment de cellulose, de protéines, de polylactides ou d'amidon ou d'un mélange de ces substances, qui est mélangée avec un solvant pour produire une solution de moulage et ce solvant est ensuite au moins partiellement éliminé de la solution de moulage et la solution de moulage est alimentée vers un dispositif (8) de moulage,
**caractérisé par le fait que** la solution de moulage est alimentée vers un évaporateur de couche mince cylindrique vertical (2) et un dissolveur de couche épaisse cylindrique horizontal (4), où la solution de moulage est, dans le dissolveur de couche épaisse (4) ou lors de l'évacuation successive du dissolveur de couche épaisse (4), à nouveau diluée à une viscosité nécessaire pour le moulage.

2. Procédé selon la revendication 1, **caractérisé par le fait que** le solvant est un oxyde d'amine tertiaire aqueux.

3. Procédé selon la revendication 2, **caractérisé par le fait que** l'évaporateur de couche mince (2) reçoit la suspension de substance de base et de solvant et la concentre par évaporation d'eau à un état de prédissolution d'environ 2,5 hydrates d'un oxyde d'amine tertiaire.

4. Procédé selon au moins l'une des revendications 1 à 3, **caractérisé par le fait que** le dissolveur de couche épaisse (4) concentre la suspension de l'évaporateur de couche mince (2) par évaporation d'eau à environ 0,8 à 1,0 hydrate, la dissout et l'homogénéise dans une solution de moulage.

5. Procédé selon au moins l'une des revendications 1 à 4, **caractérisé par le fait que** l'évaporateur de couche mince (2) et/ou le dissolveur de couche épaisse (4) fonctionne(nt) à une température de 80° à 180°C, de préférence de 100° à 150°C.

6. Procédé selon au moins l'une des revendications 1 à 5, **caractérisé par le fait que** l'évaporateur de couche mince (2) et/ou le dissolveur de couche épaisse (4) fonctionne(nt) sous un vide de 20 à 200 mbars absolus, de préférence de 30 à 100 mbars absolus.

7. Procédé selon au moins l'une des revendications 1 à 6, **caractérisé par le fait qu'**un contrôle permanent de température a lieu le long des axes de l'évaporateur de couche mince (2) et/ou du dissolveur de couche épaisse (4).

8. Procédé selon au moins l'une des revendications 1 à 7, **caractérisé par le fait que** la solution de moulage est contrôlée au moyen d'un indice optique compris entre 1.47 et 1.52, de préférence entre 1.48 et 1.50.

9. Procédé selon au moins l'une des revendications 1 à 8, **caractérisé par le fait que** la solution de moulage est une solution de filage et que la solution de filage est à nouveau diluée à la viscosité nécessaire pour la filature.

10. Procédé selon la revendication 9, **caractérisé par le fait que** le diluant est un oxyde d'amine tertiaire aqueux.

11. Dispositif pour la mise en ouvre du procédé selon au moins l'une des revendications 1 à 10, **caractérisé par le fait que** l'évaporateur de couche mince (2) et/ou le dissolveur de couche épaisse (4) sont directement reliés l'un à l'autre par leur espace de production.

12. Appareil selon la revendication 11, **caractérisé par le fait que** l'évaporateur de couche mince (2) et/ou le dissolveur de couche épaisse (4) sont directement reliés l'un à l'autre par leur espace de gaz.
